# DEMANDE DE BREVET EUROPEEN

(11) **EP 4 678 407 A1**
(43) Date de publication de la demande: **14.01.2026**
(21) Numéro de dépôt: 25188705.5
(22) Date de dépôt: 10.07.2025
(51) Int. Cl.: B60B 21/10, B60B 21/12

(54) **ROUE POUR UN VÉHICULE COMPRENANT UNE JANTE AJOURÉE**

(30) Priorité: 12.07.2024 FR 2407675
(71) Demandeur: Renault s.a.s, 92100 Boulogne Billancourt (FR)
(72) Inventeur: ZAMANIFARY, Anthony, 78280 GUYANCOURT (FR)

(57) **Abrégé**

Roue (1) pour un véhicule comprenant une jante (2) destinée à recevoir un pneu (3), la jante comprenant une paroi circonférentielle (9) comprenant une face externe (10) tournée vers le pneu et une face interne (11) à l'air libre, caractérisée en ce que la paroi circonférentielle comprend au moins une ouverture (12) traversante.

## Description

### Domaine Technique de l'invention

L'invention concerne une roue pour un véhicule, notamment un véhicule automobile. L'invention porte aussi sur une telle roue équipée d'un pneu dit « sans air ». L'invention porte encore sur un véhicule, notamment un véhicule automobile, comprenant une telle roue.

### Etat de la technique antérieure

Une roue de véhicule automobile comprend généralement une jante fixée à un moyeu de roue du véhicule, et est équipée d'un pneu monté sur la jante. La jante comprend généralement un rebord intérieur coopérant avec un flan intérieur du pneu et un rebord extérieur coopérant avec un flan extérieur du pneu. Entre le rebord intérieur et le rebord extérieur, la jante comprend une paroi circonférentielle destinée à ferme une chambre du pneu de manière à permettre un gonflage sous pression. La jante comprend également un disque ou des rayons radiaux équipé d'une interface de fixation destinée à coopérer avec le moyeu de roue. Les jantes connues de l'état de la technique sont généralement constituées de métal, par exemple en acier ou en aluminium. Une jante doit être particulièrement robuste de manière à supporter le poids du véhicule et d'éventuels chocs, par exemple lorsque la roue bute contre un trottoir, un nid de poule, ou toute autre forme de relief. Les jantes connues de l'état de la technique sont donc particulièrement lourdes.

Par ailleurs, les véhicules automobiles sont également équipés d'un système de freinage. Un système de freinage comprend des garnitures de frein destinées à frotter contre un disque de frein ou contre un tambour de frein. Le frottement des garnitures de frein lors des phases de freinage libère dans l'atmosphère des particules de freinage potentiellement nocives pour la santé. Plusieurs études épidémiologiques ont montré les effets néfastes, à court et à long terme, de l'exposition aux particules dues à l'usure des freins. En effet, considérant la taille micrométrique voir nanométrique des particules de freinage, elles peuvent pénétrer dans les alvéoles pulmonaires et les bronches, ce qui peut conduire à des cas d'inflammation, des crises d'asthme, de bronchites chroniques ou engendrer des cancers dans les cas les plus graves.

### Présentation de l'invention

Le but de l'invention est de fournir une roue pour véhicule remédiant aux inconvénients ci-dessus et améliorant les roues connues de l'art antérieur.

Plus précisément, un premier objet de l'invention est une roue à la foi légère et permettant de réduire la diffusion de particules de freinage dans l'atmosphère.

### Résumé de l'invention

L'invention se rapporte à une roue pour un véhicule, le roue comprenant une jante destinée à recevoir un pneu, la jante comprenant une paroi circonférentielle comprenant une face externe tournée vers le pneu et une face interne à l'air libre, caractérisée en ce que la paroi circonférentielle comprend au moins une ouverture traversante.

La roue peut être équipée en outre d'un pneu sans air fixé à la jante et recouvrant l'au moins une ouverture.

La roue peut comprendre une bande filtrante, notamment une bande filtrante comprenant une forme de révolution, la bande filtrante étant configurée pour filtrer des particules de freinage produites lors d'une phase de freinage du véhicule, la bande filtrante s'étendant contre la face externe de la paroi circonférentielle, la bande filtrante recouvrant l'au moins une ouverture.

La jante peut comprendre une première gorge et une deuxième gorge, un premier bord de la bande filtrante étant inséré dans la première gorge, un deuxième bord de la bande filtrante étant inséré dans la deuxième gorge, le deuxième bord étant opposé au premier bord.

L'au moins une ouverture peut comprendre une forme ovale.

L'au moins une ouverture peut comprendre une forme allongée suivant un axe d'élongation, l'axe d'élongation formant un angle non nul, notamment un angle compris entre 1° et 35° inclus, avec un axe projeté, l'axe projeté correspondant à une projection orthogonale d'un axe de rotation de la roue sur la paroi circonférentielle au niveau de l'au moins une ouverture.

L'au moins une ouverture peut comprendre un bord reliant la face externe à la face interne de la paroi circonférentielle, le bord étant constitué d'un ensemble de droites parallèles à un même axe de génératrice, l'axe de génératrice formant un angle non nul, notamment un angle compris entre 1° et 35° inclus, avec un axe radial de la roue au niveau de l'au moins une ouverture.

L'au moins une ouverture peut comprendre entre cinq et quinze ouvertures traversantes reparties régulièrement sur un pourtour de la paroi circonférentielle.

La roue peut comprendre au moins un bouchon fixé à l'au moins une ouverture.

Le bouchon peut comprendre une barrière destinée à faire face à un flux d'air généré par la rotation de la roue et une zone d'accumulation configurée pour accumuler des particules de freinage produites lors d'une phase de freinage du véhicule.

L'invention se rapporte également à un véhicule, notamment un véhicule automobile, comprenant une roue telle que définie précédemment.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue schématique d'une partie d'une roue d'un véhicule automobile selon un mode de réalisation de l'invention, la roue étant équipée d'un pneu sans air.
La figure 2 est une vue en perspective d'une partie d'une roue selon un mode de réalisation de l'invention.
La figure 3 est une vue schématique en coupe d'une partie d'une roue selon un mode de réalisation de l'invention.
La figure 4 est une vue en perspective d'une partie d'une roue selon un mode de réalisation de l'invention, une jante de la roue étant revêtue d'une bande filtrante.
La figure 5 est une vue en perspective d'une ouverture traversante prévue dans la jante de la figure 4, l'ouverture traversante étant recouverte par la bande filtrante.
La figure 6 est une vue en coupe d'une partie de la roue de la figure 4.
La figure 7 est une vue de face d'une partie d'une roue selon un mode de réalisation de l'invention, des bouchons étant fixés à des ouvertures traversantes formées dans la jante de la roue.
La figure 8 est une vue en coupe d'un bouchon fixé à une ouverture formée dans la jante de la roue.
La figure 9 est une vue en perspective du bouchon fixé à l'ouverture formée dans la jante de la roue.

### Description détaillée

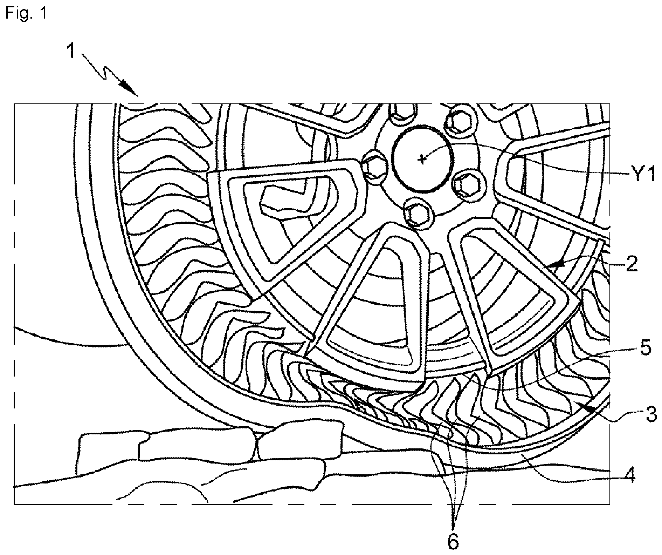

La figure 1 illustre une roue 1 selon un mode de réalisation de l'invention. La roue 1 est destinée à équiper un véhicule automobile. La roue 1 comprend une jante 2 supportant un pneu 3, dit « sans air », c'est-à-dire sans chambre destinée à être gonflée avec de l'air ou avec un gaz quelconque. Le pneu 3 comprend une bande de roulement 4 externe et une bande support 5 interne. La bande de roulement 4 et la bande support 5 présentent chacune une forme globalement cylindrique de révolution et sont agencées autour d'un même axe Y1, correspondant à l'axe de rotation de la roue 1. La bande de roulement 4 comprend une surface externe destinée à entrer en contact avec le sol. La bande support 5 s'étend autour de la jante. Le pneu 3 comprend aussi des éléments élastiques 6, notamment des lames élastiques, par exemple en caoutchouc, s'étendant radialement ou sensiblement radialement entre la bande de roulement 4 et la bande support 5. Les éléments élastiques 6 sont aptes à se déformer sous l'effet du poids du véhicule et/ou en cas de choc contre la roue. Le pneu 3 ne nécessite pas d'être gonflé et est donc increvable.

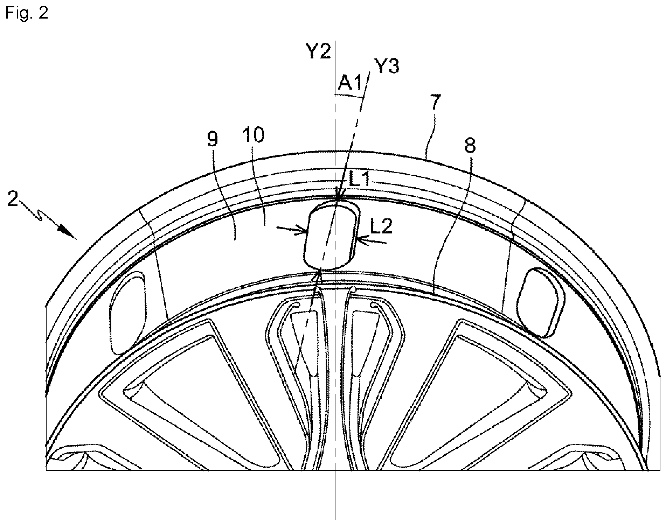

La jante 2 est illustrée sans le pneu 3 sur la figure 2. La jante 2 comprend un rebord intérieur 7, un rebord extérieur 8, et une paroi circonférentielle 9 s'étendant entre le rebord intérieur 7 et le rebord extérieur 8. Par paroi « circonférentielle » on comprend que cette paroi s'étend à 360° autour de l'axe de rotation Y1 de la roue. La paroi circonférentielle 9 peut comprendre au moins globalement une forme de révolution, notamment un cylindre de révolution, centrée sur l'axe de rotation Y1. La paroi circonférentielle 9 comprend une face externe 10 tournée vers le pneu 3, notamment vers la bande support 5 du pneu. La paroi circonférentielle 9 comprend aussi une face interne 11, opposée à la face externe 10. La face interne 11 est tournée vers l'axe de rotation Y1. La face interne 11 est à l'air libre, c'est-à-dire en contact avec l'atmosphère à pression ambiante.

Selon l'invention, la paroi circonférentielle 9 comprend au moins une ouverture 12 traversante. Par « traversante », on comprend que l'au moins une ouverture 12 débouche sur la face interne 11 et sur la face externe 10 de la paroi circonférentielle 9. De l'air peut donc circuler au travers de l'au moins une ouverture 12, au moins en l'absence de pneu monté sur la jante. Lorsque le pneu 3 est monté sur la jante, l'au moins une ouverture 12 peut déboucher sur une face interne de la bande support 5 du pneu ou sur un élément interposé entre la bande support 5 et la paroi circonférentielle 9. Ceci n'est pas gênant dans la mesure ou le pneu 3 n'a pas besoin d'être gonflé.

La présence d'au moins une ouverture permet d'alléger la roue 1. Des gains d'au moins 100g, voire au moins 200g, sur la masse totale de la jante 2 peuvent ainsi être obtenus. De plus, il a été observé de manière surprenante que la présence d'au moins une ouverture sur la paroi circonférentielle n'affaiblit pas significativement la roue 1. Celle-ci demeure donc résistante aux chocs, sans avoir à épaissir d'autres parois ou d'autres parties de la roue comparativement à une roue dépourvue d'ouverture.

L'au moins une ouverture peut, par exemple être formée dans la paroi circonférentielle 9 par usinage, par fraisage, par poinçonnage, par découpe ou encore par emboutissage notamment lorsque la roue est en acier.

Avantageusement, l'au moins une ouverture 12 comprend entre cinq et quinze ouvertures traversantes reparties régulièrement sur un pourtour de la paroi circonférentielle 9. Un tel nombre d'ouvertures 12 est à la fois suffisamment faible pour conserver un procédé de fabrication relativement simple et une robustesse élevée de la roue, et suffisamment important pour produire un allègement significatif tout en conservant un bon équilibrage de la roue. De préférence encore, le nombre d'ouvertures 12 peut être compris entre huit et douze. Le nombre d'ouvertures dépend de la masse du véhicule. Plus le véhicule est léger, plus le nombre d'ouvertures pourra être important

Par « ouvertures réparties régulièrement », on comprend que les angles séparant les ouvertures 12 adjacentes sont identiques. L'angle séparant deux ouvertures adjacentes est donc égal à 360° divisé par le nombre d'ouvertures.

Avantageusement, toutes les ouvertures 12 possèdent la même forme. En particulier la forme des ouvertures est avantageusement une forme ovale. La forme ovale est allongée au moins grossièrement parallèlement à l'axe de rotation Y1. Comme nous le verrons plus en détail par la suite, il peut être néanmoins particulièrement avantageux d'incliner la direction l'orientation de chaque ouverture 12 par rapport à la direction axiale définie par l'axe de rotation Y1. La forme ovale peut comprendre deux portions semi-circulaires à chaque extrémité. La longueur L1 de la forme ovale peut être sensiblement égale au double de sa largeur L2 et/ou comprise entre 150% et 300% de la largeur L2. Une telle forme présente l'avantage d'éviter des contraintes mécaniques excessives dans la paroi circonférentielle 9. La différence entre les contraintes maximales supportée par une jante non ajourée et une jante pourvue de telles ouvertures 12 peut ainsi être inférieure ou égale à 1%.

Avantageusement, la présence d'ouvertures 12 permet non seulement d'alléger la jante 2 mais également de piéger des particules de freinage lors des phases de freinage du véhicule. En effet, la rotation de la roue 1 génère un flux d'air centrifuge qui a tendance à plaquer les particules contre la face interne 11 de la paroi circonférentielle 9. En absence de moyen de rétention, ces particules sont ensuite éjectées en dehors de la roue 1 et contaminent l'atmosphère. Au contraire, lorsque la paroi circonférentielle est équipée des ouvertures 12, les particules de freinage s'accumulent dans ces ouvertures. Les particules de freinage peuvent ensuite être évacuées lors d'un nettoyage de la roue du véhicule. Quand bien même aucun nettoyage de la roue ne serait effectué, l'agrégation des particules entre elles permet de reconstituer des amas de particules plus volumineux et plus lourds. De tels amas sont moins volatiles et sont donc moins nocifs pour la santé.

Avantageusement, certaines formes d'ouvertures sont encore plus efficaces pour piéger les particules de freinage. Pour définir la forme avantageuse de telles ouvertures, on définit tout d'abord un axe projeté Y2. L'axe projeté Y2 correspond à une projection orthogonale de l'axe de rotation Y1 de la roue sur la paroi circonférentielle 9 au niveau de l'ouverture 12 considérée. Pour une ouverture 12 de forme allongée, on définit aussi un axe d'élongation Y3 de l'ouverture 12 comme l'axe dans lequel l'ouverture considérée s'étend. L'axe d'élongation Y3 s'étend donc suivant la plus grande dimension de l'ouverture 12. Selon une première propriété avantageuse de l'ouverture, un angle A1 formé entre l'axe projeté Y2 et l'axe d'élongation Y3 est non nul. De préférence, cet angle A1 peut être compris entre 1° et 35° inclus, voire entre 5° et 35° inclus. De manière surprenante, une telle orientation des ouvertures 12 est plus efficace pour piéger des particules.

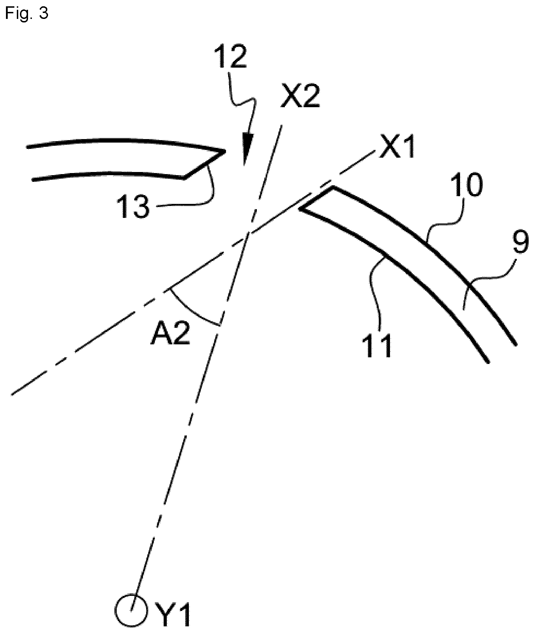

Une deuxième propriété de la forme des ouvertures 12 complémentaire ou alternative à la première propriété est également intéressante pour piéger des particules de freinage. Selon cette deuxième propriété, un bord 13 reliant la face externe 10 à la face interne 11 de la paroi circonférentielle 9 est biseauté, c'est-à-dire incliné par rapport aux faces 10 et 11. Autrement dit, et comme cela est schématisé sur la figure 3, la forme du bord 13 peut être vue comme un ensemble de droites parallèles à un même axe de génératrice X1. L'axe de génératrice X1 forme un angle A2 non nul, notamment un angle compris entre 1° et 35° inclus, de préférence entre 5° et 35° inclus, avec un axe radial X2 de la roue au niveau de l'ouverture 12, l'axe radial X2 étant défini comme l'axe perpendiculaire à l'axe de rotation Y1 de la roue, passant par le centre de l'ouverture 12 considérée.

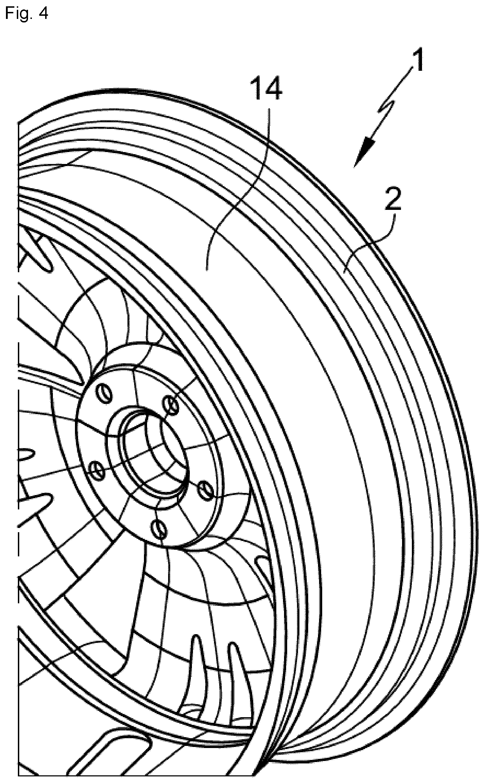

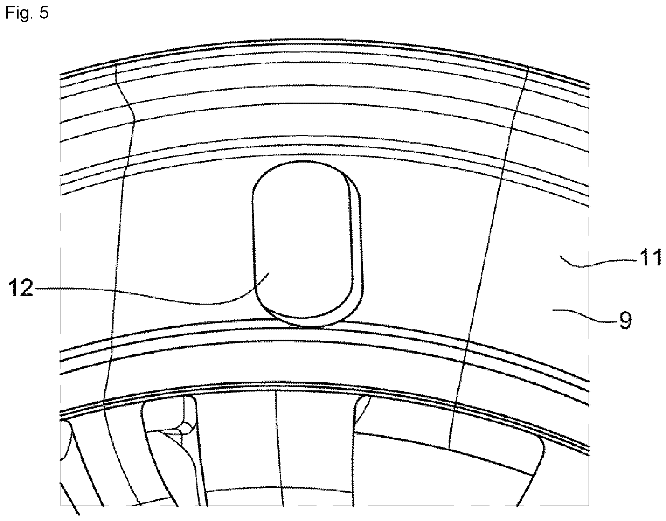

Les figures 4, 5 et 6 illustrent un premier perfectionnement de l'invention. Selon ce premier perfectionnement, la roue 1 comprend une bande filtrante 14 s'étendant contre la face externe 10 de la paroi circonférentielle 9. La bande filtrante, ou fond de jante filtrant 14, est intercalé entre la paroi circonférentielle 9 et le pneu 3. La bande filtrante 14 comprend une forme de révolution centrée sur l'axe de rotation Y1. Elle recouvre ainsi la paroi circonférentielle 9 sur 360°. En particulier, la bande filtrante 14 recouvre les ouvertures 12. La bande filtrante est configurée pour filtrer les particules de freinage lors d'une phase de freinage du véhicule. La bande filtrante 14 peut notamment comprendre une structure maillée dont la taille de maille est adaptée pour piéger les particules de freinage. La bande filtrante 14 peut également comprendre une structure alvéolée, par exemple une mousse.

Avantageusement la bande filtrante 14 peut être combinée avec un pneu 3 dont la bande support 5 comprend au moins un passage d'air en vis-à-vis de chaque ouverture 12, de manière à permettre l'instauration d'un flux d'air au travers de la bande filtrante. Quand bien même, la bande support 5 ne comprendrait pas un tel passage d'air, la structure maillée ou alvéolée de la bande filtrante pourrait remplir une fonction d'agrégation des particules de freinage, et donc limiter leur volatilité. La bande filtrante 14 peut être considérée comme une pièce d'usure et être destinée à être remplacée ou lavée à chaque changement de pneu.

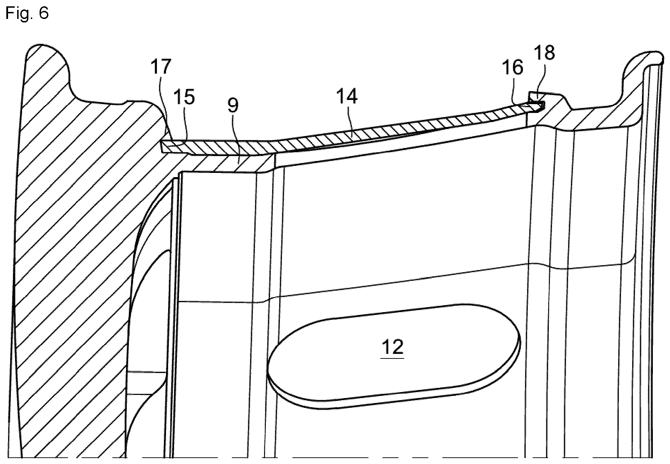

La bande filtrante 14 comprend un premier bord 15 et un deuxième bord 16 opposé au premier bord 15. Comme cela est représenté sur la figure 6, la jante 2 comprend une première gorge 17 et une deuxième gorge 18. Les deux gorges 17 et 18 sont positionnées de part et d'autre de la paroi circonférentielle 9 et se font face. La distance séparant les deux gorges 17, 18 est sensiblement égale à la largeur de la bande filtrante 14. Les deux gorges 17 et 18 possèdent sensiblement la forme d'un « U ». Les deux gorges 17 et 18 peuvent être formée par usinage dans la jante 2, c'est-à-dire par ablation de matière. Le premier bord 15 de la bande filtrante 14 est inséré dans la première gorge 15, et le deuxième bord 16 de la bande filtrante est inséré dans la deuxième gorge 18. On réalise ainsi une fonction de maintien en place de la bande filtrante 14. En variante ou en complément, la bande filtrante pourrait être collée et/ou comprendre un diamètre et une élasticité adaptés pour plaquer la bande filtrante 14 contre la paroi circonférentielle 9.

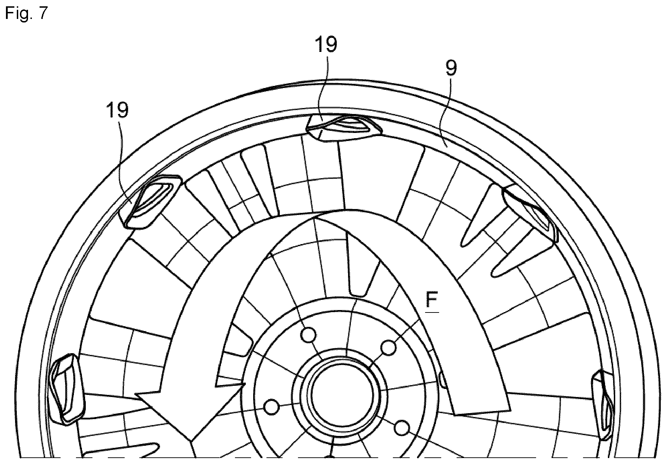

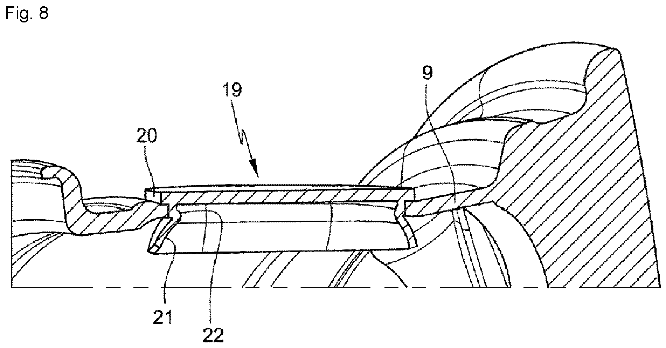

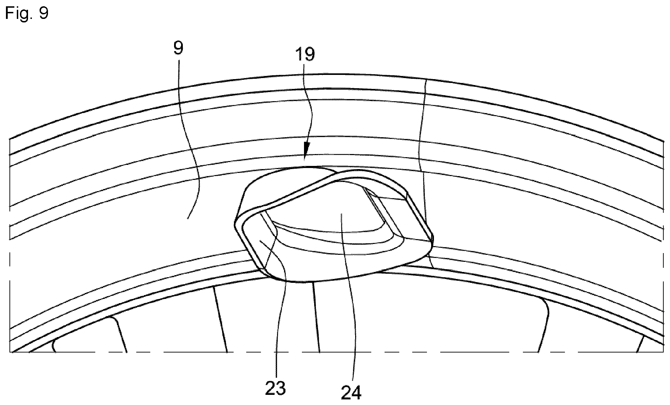

Les figures 7, 8 et 9 illustrent un deuxième perfectionnement de l'invention. Selon ce deuxième perfectionnement, la roue 1 comprend au moins un bouchon 19 fixé à l'au moins une ouverture 12. Le bouchon 19 est configuré pour obturer l'au moins une ouverture 12. De préférence, chaque ouverture 12 reçoit un bouchon 19. Tous les bouchons 19 peuvent avoir une forme identique. Chaque bouchon 19 peut comprendre une partie externe 20 s'étendant du côté externe de la paroi circonférentielle 9 et une partie interne 21 s'étendant du côté externe de la paroi circonférentielle 9. Entre sa partie externe 20 sa parte interne 21, le bouchon peut comprendre une partie étroite 22 épousant les bords 13 d'une ouverture. Au moins la partie externe 20 ou la partie interne 21 est formée dans un matériau déformable pour la mise en place du bouchon 19 dans une ouverture 12. La partie externe 20 et la partie interne 21 forment des moyens de maintien en position du bouchon 19. Le bouchon 19 peut notamment être fabriqué dans un matériau résistant aux températures élevées pouvant apparaitre lors de freinages intensifs. Les dimensions du bouchon 19 peuvent être choisies de sorte que le bouchon soit éloigné d'un disque de frein d'une distance minimale.

Les bouchons 19 peuvent être des éléments en plastique. Les bouchons peuvent notamment être des éléments monolithiques obtenus par moulage. Les bouchons peuvent avantageusement comprendre au moins une partie exposée aux particules de freinage sous forme d'une mousse. Une mousse comprend une multitude d'alvéoles potentiellement adaptées pour piéger des particules de freinage.

Avantageusement, chaque bouchon 19 comprend une barrière 23 destinée à faire face à un flux d'air F généré par la rotation de la roue, et une zone d'accumulation 24 configurée pour accumuler des particules de freinage. De même que pour les modes de réalisation précédents, le bouchon 19 est apte à remplir une fonction d'agrégation des particules de freinage pour limiter leur volatilité.

Comme illustré sur la figure 7, la barrière 23 s'étend sensiblement perpendiculairement au flux d'air F généré par la rotation de la roue et potentiellement chargé de particules de freinage. La barrière 23 s'étend radialement tandis que la zone d'accumulation 24 s'étend parallèlement à la paroi circonférentielle 9, en vis-à-vis de l'ouverture 12. La barrière 23 se trouve en aval de la zone d'accumulation de chaque bouchon suivant le sens de propagation du flux d'air F. Les particules sont donc destinées à buter contre la barrière 23 puis à s'accumuler dans la zone d'accumulation 24.

La zone d'accumulation 24 peut fermer hermétiquement l'ouverture 12, ou au contraire, former un filtre qui bloque les particules de freinage et laisse passer l'air. En remarque, dans l'hypothèse où les bouchons 19 formeraient un moyen de fermeture étanche des ouvertures 12, la jante 2 équipée de ces bouchons pourrait aussi être équipée d'un pneu gonflable puisque les bouchons empêcheraient une fuite d'air. D'une manière générale une jante dont la paroi circonférentielle est munie d'ouvertures pourrait être équipée d'un pneu gonflable à condition de prévoir une chambre à air hermétique ou tout autre moyen permettant d'éviter une fuite d'air sous pression dans le pneu.

Finalement, grâce à l'invention, on dispose d'une roue ajourée donc plus légère. De plus, cette roue permet de limiter la diffusion des particules de freinage dans l'atmosphère. L'invention qui vient d'être décrite pourra également être transposée à une roue pour une moto, pour un camion, et plus généralement à tout engin équipé de roues.

## Revendications

1. Roue (1) pour un véhicule comprenant une jante (2) destinée à recevoir un pneu (3), la jante comprenant une paroi circonférentielle (9) comprenant une face externe (10) tournée vers le pneu et une face interne (11) à l'air libre, **caractérisée en ce que** la paroi circonférentielle comprend au moins une ouverture (12) traversante.

2. Roue (1) selon la revendication précédente, **caractérisée en ce qu'**elle est équipée en outre d'un pneu (3) sans air fixé à la jante (2) et recouvrant l'au moins une ouverture (12).

3. Roue (1) selon l'une des revendications précédentes, **caractérisée en ce qu'**elle comprend une bande filtrante (14), notamment une bande filtrante comprenant une forme de révolution, la bande filtrante étant configurée pour filtrer des particules de freinage produites lors d'une phase de freinage du véhicule, la bande filtrante s'étendant contre la face externe (10) de la paroi circonférentielle (9), la bande filtrante recouvrant l'au moins une ouverture (12).

4. Roue (1) selon la revendication précédente, **caractérisée en ce que** la jante comprend une première gorge (17) et une deuxième gorge (18), un premier bord (15) de la bande filtrante (14) étant inséré dans la première gorge, un deuxième bord (16) de la bande filtrante étant inséré dans la deuxième gorge, le deuxième bord étant opposé au premier bord.

5. Roue (1) selon l'une des revendications précédentes, **caractérisée en ce que** l'au moins une ouverture (12) comprend une forme ovale.

6. Roue (1) selon l'une des revendications précédentes, **caractérisée en ce que** :
- l'au moins une ouverture (12) comprend une forme allongée suivant un axe d'élongation (Y3), l'axe d'élongation (Y3) formant un angle (A1) non nul, notamment un angle compris entre 1° et 35° inclus, avec un axe projeté (Y2), l'axe projeté correspondant à une projection orthogonale d'un axe de rotation (Y1) de la roue sur la paroi circonférentielle (9) au niveau de l'au moins une ouverture (12),
et/ou **en ce que**
- l'au moins une ouverture (12) comprend un bord (13) reliant la face externe (10) à la face interne (11) de la paroi circonférentielle (9), le bord étant constitué d'un ensemble de droites parallèles à un même axe de génératrice (X1), l'axe de génératrice formant un angle (A2) non nul, notamment un angle compris entre 1° et 35° inclus, avec un axe radial (X2) de la roue au niveau de l'au moins une ouverture.

7. Roue (1) selon l'une des revendications précédentes, **caractérisée en ce que** l'au moins une ouverture (12) comprend entre cinq et quinze ouvertures traversantes reparties régulièrement sur un pourtour de la paroi circonférentielle (9).

8. Roue (1) selon l'une des revendications précédentes, **caractérisé en ce qu'**elle comprend au moins un bouchon (19) fixé à l'au moins une ouverture (12).

9. Roue (1) selon la revendication précédente, **caractérisée en ce que** le bouchon comprend une barrière (23) destinée à faire face à un flux d'air (F) généré par la rotation de la roue et une zone d'accumulation (24) configurée pour accumuler des particules de freinage produites lors d'une phase de freinage du véhicule.

10. Véhicule, notamment véhicule automobile, comprenant une roue (1) selon l'une des revendications précédentes.
